# EUROPÄISCHE PATENTSCHRIFT

(11) **EP 1 486 325 B1**
(45) Veröffentlichungstag und Bekanntmachung des Hinweises auf die Patenterteilung: **16.09.2009**
(21) Anmeldenummer: 04022467.7
(22) Anmeldetag: 09.05.2001
(51) Int. Cl.: B32B 27/08, F16L 59/00, E04B 1/80, B32B 27/16, F16L 59/02

(54) **Folienlaminate als Hochbarrierefolien und deren Verwendung in Vakuumisolierpaneelen**
Laminated films as high barrier films and their use in vacuum insulation panels
Feuilles laminées telles que des feuilles barrières et leur utilisation dans des panneaux isolants sous vide

(30) Priorität: 22.05.2000 DE 10025321
(43) Veröffentlichungstag der Anmeldung: 15.12.2004
(62) Teilanmeldung aus: 01111130.9
(73) Patentinhaber: Wipak Walsrode GmbH & Co. KG, 29656 Walsrode (DE)
(72) Erfinder: Jacobsen, Sven, Dr., 29683 Fallingbostel (DE); Kuckertz, Christian, Dr., 57462 Olpe (DE); Brandt, Rainer, Dr., 29664 Walsrode (DE)
(74) Vertreter: Kutzenberger, Helga

(56) Entgegenhaltungen:
- DE-U- 29 613 847
- DATABASE WPI Section Ch, Week 199150 Derwent Publications Ltd., London, GB; Class A92, AN 1991-365057 XP002185816 & JP 03 244535 A (HOSOKAWA YOKO KK) 31. Oktober 1991 (1991-10-31)
- DATABASE WPI Section Ch, Week 199125 Derwent Publications Ltd., London, GB; Class A92, AN 1991-181927 XP002185817 & JP 03 110143 A (TOPPAN PRINTING CO LTD) 10. Mai 1991 (1991-05-10) & JP 03 110143 A (TOPPAN PRINTING CO LTD) 10. Mai 1991 (1991-05-10)

## Beschreibung

Die vorliegende Erfindung betrifft Folienlaminate die als Hochbarrierefolien besonders gasdiffusionsdicht sind und die Verwendung dieser gasdiffusionsdichten Folienlaminate in der Herstellung von Vakuum Isolations Paneelen.

In einigen speziellen technischen Produkten wie zum Beispiel in der Herstellung von Vakuum Isolations Paneelen (VIP) sind Folien erforderlich, die äußerst geringe Gasdiffusionswerte besitzen, um dabei im Beispiel der VIP zu garantieren, dass das einmal angelegte Vakuum und damit die Funktionsfähigkeit der VIP über einen sehr langen Zeitraum (10-15 Jahre) erhalten bleiben.

Übliche Sperrschichtfolien aus Kunststoffen, wie beispielsweise EP-A 0 517 026 beschreibt, erreichen nicht die erforderliche Gassperrwirkung. Verbunde die eine Aluminiumfolie enthalten, besitzen zwar eine totale Gassperre, aber sind in vielen Anwendungen bedingt durch die Wärmeleitfähigkeit des Aluminiums nicht erwünscht. Darüber hinaus sind metallisierte oder mit SiOx bedampfte Folien bekannt, die die Nachteile bezüglich der Wärmeleitfähigkeit der reinen Metallfolien umgehen (wie zum Beispiel in EP-A 0 878 298 beschrieben), gleichzeitig höhere Sperrwirkungen als reine Kunststofffolien erzielen, dabei aber ebenfalls weit von den geforderten Gassperrwerten entfernt sind.

Unter Vakuumisolationspaneelen (VIP) versteht man dabei plattenförmige Gebilde, die aus einem Dämm- oder Füllstoff bestehen und von einer Hochbarrierefolie vakuumverpackt umhüllt sind. Die Art und insbesondere die Höhe des Vakuums sind dabei von dem verwendeten Dämm- oder Füllstoff und der verlangten Isolationswirkung des VIP abhängig. Die Hochbarrierefolie verhindert dabei über die Lebensdauer des VIP die Diffusion von Gasen, die das Vakuum und damit die Isolationswerte des VIP verschlechtern. Metallfolien sind dabei als Hochbarrierefolien unerwünscht, da diese über die Kanten des plattenförmigen VIP Wärme leiten und damit die Isolationsleistung verringern. Dies gilt auch für die aus US-A-4,669,632 bekannten VIPS, deren Umhüllung zunächst teilweise aus Metallfolien aufweisenden Filmlaminaten besteht.

Aufgabe der vorliegenden Erfindung war es daher, Folienlaminate bereitzustellen, die eine besonders hohe Gassperrwirkung erzielen, ohne dabei wärmeleitende Metallfolien als Komponenten einzusetzen. Dabei sollten gleichzeitig durch geeignete Kombination von Materialien weitere mechanische und thermische Eigenschaften des Folienlaminats positiv beeinflusst werden. Insbesondere sollen Folienlaminate zur Verfügung gestellt werden, die zur Herstellung von Vakuumisolationspaneelen (VIP) geeignet sind.

Erfindungsgemäß gelingt dies durch den Gegenstand von Anspruch 1, der ein mehrschichtiges Folienlaminat mit mindestens 3 Schichten mit folgender Schichtenfolge:
(Ia) Mit Aluminium oder SiOx oder einem Metalloxid der 2. oder 3. Hauptgruppe bedampfte Polyester Folienschicht.
(Ib) Mit Aluminium oder SiOx oder einem Metalloxid der 2. oder 3. Hauptgruppe bedampfte Polyester Folienschicht.
(II) Heißsiegelschicht als Siegelmedium ohne wärmeleitende Metallfolien als Komponenten aufweist.

In DE-U-296 13 847 werden VIPS beschrieben, deren Folienlaminate als Umhüllung einen davon unterschiedlichen Aufbau aufweisen. Eine verbesserte Gassperrwirkung gegenüber der Gesamtwirkung der einzelnen Schichten dieser bekannten Folienlaminate als Umhüllung der VIPS geht aber aus diesem Stande der Technik nicht hervor.

Daher würde man zunächst erwarten, dass die Gassperrwirkung durch die Gassperrwirkung der besten der Einzelfolien gegeben ist, bzw. sich aus der Summation der Sperrwirkungen der Einzelfolien errechnet, jedoch erhält man überraschenderweise Gassperrwirkungen, die nicht nur deutlich höher als die der Einzelfolien liegen, sondern sogar teils deutlich höher als die der Summe der Einzelfolien liegen. Dies kann zum Beispiel durch eine synergistische Fehlerabdeckungen der einzelnen metallisierten Schichten erklärt werden.

Die mit Aluminium oder SiOx oder einem Metalloxid der 2. oder 3. Hauptgruppe bedampften Schichten können dabei aus allen üblichen Kunststoffen bestehen, insbesondere aber auch aus Polyestern. Die Dicke der einzelnen Schichten ist dabei nicht wesentlich, wird aber zu einem kleinen Anteil die Gassperrwirkung beeinflussen, zum anderen die mechnischen und thermischen Eigenschaften des Folienlaminats mitbestimmen.

Mit diesen erfindungsgemäßen Folienlaminaten lassen sich insbesondere Sauerstoffdiffusionswerte kleiner 0,01 cm³/m² d bar (23°C, 75% r.h.) und Wasserdampfdiffusionswerte kleiner 0,1 g/m² d (38°C, 90% r.h.) erreichen. Dabei sind mit Laminaten mit mehr als 3 Schichten durchaus auch Folienlaminate zu erhalten, die diese Werte noch deutlich unterschreiten. Durch die Kombination der unterschiedlichen Lagen lassen sich dabei nicht nur die Gasdiffusionswerte auf die von der Anwendung erforderlichen Werte einstellen, darüber hinaus ist es möglich durch Modifikation des Schichtmaterials das mit Aluminium oder SiOx oder einem Metalloxid der 2. oder 3. Hauptgruppe bedampft ist, die mechanischen und/oder thermischen Kennwerte des resultierenden erfindungsgemäßen Laminats zu variieren.

Besonders bevorzugt ist eine Anordnung des Folienlaminats, in dem jeweils 2 der mit Aluminium oder SiOx oder einem Metalloxid der 2. oder 3. Hauptgruppe bedampften Schichten mit den bedampften Seiten gegeneinander laminiert sind. Dies ergibt besonders vorteilhafte Gassperrwerte, da sich hierbei die beiden Metallisierungsschichten direkt ergänzen, sodass mikroskopische Beschädigungen der einen Metallisierung durch die zweite Metallisierung verdeckt werden können, was zu einer überproportionalen Steigerung der Barriereeigenschaften führt.

In einem besonders bevorzugten Aufbau sind eine oder mehrere der Schichten (Ia,Ib,Ic,...) mit Aluminium, vorzugsweise in einer Dicke von 30 bis 80 nm, bedampft.

Als Heißsiegelschicht (II) können Polyolefin Homo- oder Polyolefin Copolymere eingesetzt werden. Bevorzugt sind Linear Low Density Polyethylen (LLDPE), Polybutylen (PB), Ethylenvinylacetat (EVA), Polypropylen (PP), High Density Polyethylen (HDPE), Ionomer (IO) und Mischungen dieser Stoffe, weiterhin denkbar ist amorphes Polyethylenterephthalat (aPET) oder andere siegelfähige Polymermaterialien. Erfindungsgemäß möglich ist auch eine mehrschichtige, durch Coextrusion mehrerer Schichten aus den genannten Materialien hergestellte Ausführungsform der Heißsiegelschicht (II). Die Dicke der Heißsiegelschicht (II) beträgt vorzugsweise 20 bis 200µm, besonders bevorzugt 50 bis 100µm.

Insbesondere kommen bei der Produktion von VIP Ionomersiegelschichten oder andere leichtfließende Siegelschichten zum Einsatz, die unter den typischen staubigen Produktionsbedingungen bei der VIP Herstellung zu besonders gasdichten Siegelnähten führen.

Als Klebe- und Verbindungsschicht zwischen den einzelnen Schichten kommen vorzugsweise handelsübliche Reaktivklebstoffe wie insbesondere Zwei-Komponenten-Polyurethanklebstoffe zum Einsatz. Es können aber auch polyolefinische Haftvermittler, vorzugsweise Polyethylen-Homopolymer, Ethylenethylacrylat (EEA) oder Ethylenmethacrylsäure (EMA) eingesetzt werden. Jedoch ist das erfindungsgemäße Folienlaminat und insbesondere seine Gassperrwirkung nicht wesentlich von der Art der Verbindung der einzelnen Schichten abhängig.

Hierbei ist insbesondere bei den Zwei-Komponenten-Polyurethanklebstoffen darauf zu achten, dass die Komponentenzusammensetzung so gewählt wird, dass eine möglichst geringe Gasbildung stattfindet. Ansonsten kann dies zur Bildung von Gasblasen in den Verbindungsschichten führen.

Ein weiterer Gegenstand der Erfindung ist die Verwendung der erfindungsgemäß zum Einsatz kommenden Folienlaminate in Vakuumisolierpaneelen.

Im Folgenden sind beispielhafte Folienaufbauten wiedergegeben, die die erfindungsgemäßen Folienlaminate näher beschreiben sollen. Diese Beispiele sind jedoch nicht vollständig und sollen die erfindungsgemäßen Folienlaminate nicht einschränken.

### Beispiele

B)
   (Ia) mit Aluminium bedampfter Polyester, bedampfte Seite zu (Ib) gewandt
   (Ib) mit Aluminium bedampfter Polyester, bedampfte Seite zu (Ia) gewandt
   (II) Polyethylen-Siegelschicht
E)
   (Ia) mit Aluminium bedampftes Coextrudat aus Polyamid/EVOH/Polyamid, bedampfte Seite zu (Ib)
   (Ib) mit Aluminium bedampfter Polyester, bedampfte Seite zu (Ic) gewandt
   (Ic) mit Aluminium bedampfter Polyester, bedampfte Seite zu (Ib) gewandt
   (II) amorphe Polyethylenterephthalat-Siegelschicht
F)
   (Ia) mit Aluminium bedampftes Polyamid, bedampfte Seite zu (Ib) gewandt
   (Ib) mit Aluminium bedampfter Polyester, bedampfte Seite zu (Ia) gewandt
   (Ic) mit Aluminium bedampfter Polyester, bedampfte Seite zu (Id) gewandt
   (Id) mit Aluminium bedampfter Polyester, bedampfte Seite zu (Ic) gewandt
   (II) Polypropylen-Siegelschicht

## Patentansprüche

1. Eine Vakuumisolationspaneele, die von einer Hochbarrierefolie bestehend aus einem mehrschichtigen Folienlaminat umfassend zwei oder mehrere mit Aluminium oder SiOx oder einem Metalloxid der 2. oder 3. Hauptgruppe bedampfte Polyesterschichten (Ia, Ib) und eine Heißsiegelschicht (II) aus Polyolefin oder amorphem Polyethylenterephthalat vakuumverpackt umhüllt ist.

2. Eine Vakuumisolationspaneele nach Anspruch 1, **dadurch gekennzeichnet, dass** das mehrschichtige Folienlaminat insgesamt 3 Schichten umfaßt.

3. Eine Vakuumisolationspaneele nach einem der Ansprüche 1 oder 2, **dadurch gekennzeichnet, dass** jeweils zwei der mit Aluminium oder SiOx oder einem Metalloxid der 2. oder 3. Hauptgruppe bedampften Schichten des mehrschichtigen Folienlaminats mit den bedampften Schichten gegeneinander laminiert sind.

4. Eine Vakuumisolationspaneele nach einem der Ansprüche 1-3, **dadurch gekennzeichnet, dass** die mit Aluminium bedampften Schichten des mehrschichtigen Folienlaminats in einer Dicke von 30 bis 80 nm bedampft sind.

5. Eine Vakuumisolationspaneele nach einem der Ansprüche 1-4, **dadurch gekennzeichnet, dass** die einzelnen Schichten des mehrschichtigen Folienlaminats mittels Zwei-Komponenten-Polyurethan-Klebstoffen laminiert wurden, wobei insbesondere das Verhältnis der Klebstoffkomponenten so gewählt wurde, daß bei der Klebstoffaushärtung die entstehenden Gasmengen minimiert wurden.

6. Eine Vakuumisolationspaneele nach einen der Ansprüche 1-5, **dadurch gekennzeichnet, dass** die Außenlage (Ia) des mehrschichtigen Folienlaminats bedruckt ist.

7. Eine Vakuumisolationspaneele nach Anspruch 1, **dadurch gekennzeichnet, dass** das mehrschichtige Folienlaminat folgende Schichtfolge aufweist:
(Ia) mit Aluminium bedampfter Polyester, bedampfte Seite zu (Ib) gewandt
(Ib) mit Aluminium bedampfter Polyester, bedampfte Seite zu (Ia) gewandt
(II) Polyethylen-Siegelschicht.

8. Eine Vakuumisolatonspaneele nach Anspruch 1, **dadurch gekennzeichnet, dass** das mehrschichtige Folienlaminat folgende Schichtfolge aufweist:
(Ia) mit Aluminium bedampfter Polyester, bedampfte Seite zu (Ib) gewandt
(Ib) mit Aluminium bedampfter Polyester, bedampfte Seite zu (Ia) gewandt
(II) Polypropylen-HeißSiegelschicht.

9. Eine Vakuumisolatonspaneele nach Anspruch 1, **dadurch gekennzeichnet, dass** das mehrschichtige Folienlaminat folgende Schichtfolge aufweist:
(Ia) mit Aluminium bedampfter Polyester, bedampfte Seite zu (Ib) gewandt
(Ib) mit Aluminium bedampfter Polyester, bedampfte Seite zu (Ia) gewandt
(II) HeißSiegelschicht aus amorphen Polyethylenterephthalat.

10. Verwendung des mehrschichtigen Folienlaminats gemäß einem der Ansprüche 1 bis 9 als eine Hochbarrierefolien-Umhüllung für eine Vakuumisolationspaneele.

## Claims

1. Vacuum insulation panel vacuum-packed in an encapsulating high-barrier film composed of a multilayer laminated film encompassing two or more polyester layers (Ia, Ib) which have been aluminium-metallized or have been vapour-coated with SiOₓ or with a metal oxide of the 2nd or 3rd main group, and encompassing a heat-sealable layer (II) composed of polyolefin or of amorphous polyethylene terephthalate.

2. Vacuum insulation panel according to Claim 1, **characterized in that** the multilayer laminated film encompasses a total of 3 layers.

3. Vacuum insulation panel according to either of Claims 1 and 2, **characterized in that** in each case two of the layers of the multilayer laminated film which have been aluminium-metallized or have been vapour-coated with SiOₓ or with a metal oxide of the 2nd or 3rd main group have been laminated with the metallized or vapour-coated layers against one another.

4. Vacuum insulation panel according to any of Claims 1 to 3, **characterized in that** the aluminium-metallized layers of the multilayer laminated film have been metallized using a thickness of from 30 to 80 nm.

5. Vacuum insulation panel according to any of Claims 1 to 4, **characterized in that** the individual layers of the multilayer laminated film have been laminated by means of two-component polyurethane adhesives, the ratio of the adhesive components having in particular been selected in such a way as to minimize the amounts of gas evolved during the hardening of the adhesive.

6. Vacuum insulation panel according to any of Claims 1 to 5, **characterized in that** the external sublayer (Ia) of the multilayer laminated film has been printed.

7. Vacuum insulation panel according to Claim 1, **characterized in that** the multilayer laminated film has the following sequence of layers:
(Ia) aluminium-metallized polyester, metallized side facing towards (Ib)
(Ib) aluminium-metallized polyester, metallized side facing towards (Ia)
(II) sealable polyethylene layer.

8. Vacuum insulation panel according to Claim 1, **characterized in that** the multilayer laminated film has the following sequence of layers:
(Ia) aluminium-metallized polyester, metallized side facing towards (Ib)
(Ib) aluminium-metallized polyester, metallized side facing towards (Ia)
(II) heat-sealable polypropylene layer.

9. Vacuum insulation panel according to Claim 1, **characterized in that** the multilayer laminated film has the following sequence of layers:
(Ia) aluminium-metallized polyester, metallized side facing towards (Ib)
(Ib) aluminium-metallized polyester, metallized side facing towards (Ia)
(II) heat-sealable layer composed of amorphous polyethylene terephthalate.

10. Use of the multilayer laminated film according to any of Claims 1 to 9 as high-barrier film encapsulation for a vacuum insulation panel.

## Revendications

1. Panneau isolant sous vide, lequel est entouré d'une feuille à haute propriété de barrière, encapsulé sous vide, ladite feuille à haute propriété de barrière étant constituée d'une feuille laminée multicouche comprenant deux couches ou plus de deux couches en polyester (Ia, Ib) métallisées à l'aluminium ou au SiOx ou avec un oxyde d'un métal du 2^{e} ou du 3^{e} groupe principal et une couche de thermoscellage (II) de polyoléfine ou de polyéthylène téréphtalate amorphe.

2. Panneau isolant sous vide selon la revendication 1, **caractérisé en ce que** la feuille laminée multicouche comprend au total 3 couches.

3. Panneau isolant sous vide selon une des revendications 1 ou 2, **caractérisé en ce que** deux des couches de la feuille laminée multicouche métallisées à l'aluminium ou au SiOx ou avec un oxyde d'un métal du 2^{e} ou 3^{e} groupe principal sont chaque fois laminées les unes contre les autres avec les couches métallisées.

4. Panneau isolant sous vide selon une des revendications 1 à 3, **caractérisé en ce que** les couches de la feuille laminée multicouche métallisées à l'aluminium sont métallisées en une épaisseur de 30 à 80 nm.

5. Panneau isolant sous vide selon une des revendications 1 à 4, **caractérisé en ce que** les couches individuelles de la feuille laminée multicouche ont été laminées au moyen d'adhésifs de polyuréthanne à deux composants, dans laquelle le rapport des composants d'adhésif a été choisi de manière à réduire les quantités de gaz se formant lors du durcissement de l'adhésif.

6. Panneau isolant sous vide selon une des revendications 1 à 5, **caractérisé en ce que** la strate extérieure (Ia) de la feuille laminée multicouche est imprimée.

7. Panneau isolant sous vide selon la revendication 1, **caractérisé en ce que** la feuille laminée multicouche présente la suite de couches suivants :
(Ia) du polyester métallisé à l'aluminium, le côté métallisé étant orienté vers (Ib)
(Ib) du polyester métallisé à l'aluminium, le côté métallisé étant orienté vers (Ia)
(II) une couche de scellage en polyéthylène.

8. Panneau isolant sous vide selon la revendication 1, **caractérisé en ce que** la feuille laminée multicouche présente la suite de couches suivants :
(Ia) du polyester métallisé à l'aluminium, le côté métallisé étant orienté vers (Ib)
(Ib) du polyester métallisé à l'aluminium, le côté métallisé étant orienté vers (Ia)
(II) une couche de thermoscellage en polypropylène.

9. Panneau isolant sous vide selon la revendication 1, **caractérisé en ce que** la feuille laminée multicouche présente la suite de couches suivante :
(Ia) du polyester métallisé à l'aluminium, le côté métallisé étant orienté vers (Ib)
(Ib) du polyester métallisé à l'aluminium, le côté métallisé étant orienté vers (Ia)
(II) une couche de thermoscellage composée de polyéthylène téréphtalate amorphe.

10. Utilisation de la feuille laminée multicouche selon une des revendications 1 à 9 comme un entourage de feuille à haute propriété de barrière pour un panneau isolant sous vide.
